(19) Europäisches Patentamt
European Patent Office
Office européen des brevets

(11) Veröffentlichungsnummer : **0 416 430 B1**

(12) **EUROPÄISCHE PATENTSCHRIFT**

(45) Veröffentlichungstag der Patentschrift : **14.04.93 Patentblatt 93/15**

(51) Int. Cl.$^5$ : **C08L 77/00,** C08L 71/12, // (C08L77/00, 71:12, 67:03)

(21) Anmeldenummer : **90116426.9**

(22) Anmeldetag : **28.08.90**

# (54) Thermoplastische Formmasse mit erhöhter Wärmeformsbeständigkeit.

(30) Priorität : **06.09.89 DE 3929590**

(43) Veröffentlichungstag der Anmeldung : **13.03.91 Patentblatt 91/11**

(45) Bekanntmachung des Hinweises auf die Patenterteilung : **14.04.93 Patentblatt 93/15**

(84) Benannte Vertragsstaaten : **BE DE ES FR GB NL**

(56) Entgegenhaltungen :
**EP-A- 0 244 090**
**EP-A- 0 300 751**
**EP-B- 0 030 417**
**DE-A- 3 726 283**
**DE-C- 3 734 645**

(73) Patentinhaber : **BASF Aktiengesellschaft**
**Carl-Bosch-Strasse 38**
**W-6700 Ludwigshafen (DE)**

(72) Erfinder : **Muehlbach, Klaus, Dr.**
**Dr.-Heinrich-Winter-Strasse 19**
**W-6148 Heppenheim (DE)**
Erfinder : **Baumgartner, Ehrenfried, Dr.**
**Goethestrasse 1**
**W-6701 Roedersheim-Gronau (DE)**
Erfinder : **Hisgen, Bernd**
**Rheinstrasse 8**
**W-6708 Neuhofen (DE)**
Erfinder : **Rosenau, Bernhard, Dr.**
**Karolinenterrasse 12**
**W-6730 Neustadt (DE)**

EP 0 416 430 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft thermoplastische Formmassen, enthaltend

A) 5 bis 95,9 Gew.-% eines thermoplastischen Polyamids (Komponente A),

B) 4 bis 80 Gew.-% einer Komponente auf Basis eines Polyphenylenethers, die bis zu 40 Gew.-% eines vinylaromatischen Polymeren in Mischung enthalten kann (Komponente B),

C) 0,1 bis 15 Gew.-% eines thermotropen, flüssigkristallinen Oligomeren oder Polymeren (Komponente C),

D) 0 bis 25 Gew.-% eines kautschukelastischen Polymerisats (Komponente D) und

E) 0 bis 20 Gew.% eines weiteren Polymeren (Komponente E).

Weiterhin betrifft die Erfindung die Verwendung dieser Formmassen zur Herstellung von Formkörpern sowie die Formkörper, die unter Verwendung dieser Formmassen als wesentliche Komponenten erhältlich sind.

Thermoplastische Formmassen auf der Basis von Polyphenylenethern und Polyamiden sind z.B. in der EP-A 24 120, EP-A 46 040, EP-A 244 090, EP-A 262 901 und WO-A 87-00540 beschrieben. Aufgrund der bekannten Unverträglichkeit von Polyphenylenethern und Polyamiden werden zum Teil niedermolekulare oder hochmolekulare Haftvermittler zugesetzt. Gemäß der EP-A 226 910 können auch carboxylierte Polyphenylenether eingesetzt werden.

Der Zusatz von flüssigkristallinen Polymeren zu anderen Polymeren ist bekannt. So sind in der DE-OS 32 16 413 Mischungen aus thermotropen, flüssigkristallinen Polymeren und Polyamiden beschrieben, aus denen man Formkörper mit besonders hoher Steifigkeit und Festigkeit erhält.

In der EP 30 417 werden Mischungen aus einem flüssigkristallinen Polymeren und anderen Polymeren z.B. Polyamiden oder Polyphenylenethern beschrieben. Der allgemeinen Lehre und den Beispielen ist zu entnehmen, daß der Zusatz des flüssigkristallinen Polymeren die Verarbeitbarkeit (Fließfähigkeit) verbessert, jedoch weist Polyamid 66, das 10 Gew.-% eines flüssigkristallinen Polymeren enthält, eine deutlich verringerte Zähigkeit auf.

Der vorliegenden Erfindung lag daher die Aufgabe zugrunde, thermoplastische Formmassen bereitzustellen, die neben einer besseren Verarbeitbarkeit zusätzlich über verbesserte mechanische Eigenschaften verfügen.

Demgemäß wurden die eingangs definierten Formmassen gefunden.

Bevorzugte Massen dieser Art und ihre Verwendung sind den Unteransprüchen zu entnehmen.

Die als Komponente A in den Massen enthaltenen Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den U.S.-Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten aliphatischen $C_4$-$C_{12}$-Dicarbonsäure oder einer aromatischen $C_8$-$C_{12}$-Dicarbonsäure mit einem gesättigten oder aromatischen Diamin, welches bis 14 Kohlenstoffatome aufweist, oder durch Kondensation von ω-Aminocarbonsäuren oder Polyaddition von Lactamen hergestellt werden. Das Verhältnis von Amino- zu Carboxylendgruppen beträgt 0,25:1 bis 4:1.

Bevorzugte Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Bevorzugt werden lineare Polyamide mit einem Schmelzpunkt über 200°C.

Besonders bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei 23°C, was einem Molekulargewicht von etwa 15 000 bis 45 000 entspricht. Polyamide mit einer relativen Viskosität von 2,5 bis 3,5, insbesondere 2,6 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Der Anteil der Polyamide A an den erfindungsgemäßen Formmassen beträgt 5 bis 95,9, vorzugsweise 15 bis 94,9 und insbesondere 25 bis 89 Gew.%.

Als Komponente B enthalten die erfindungsgemäßen Formmassen 4 bis 80, bevorzugt 4 bis 60 und insbesondere 6 bis 55 Gew.-% eines Polyphenylenethers. Es können unmodifizierte Polyphenylenether $B_1$ oder modifizierte Polyphenylenether $B_2$ sowie Mischungen aus $B_1$ und $B_2$ verwendet werden. Bevorzugt sind modifizierte Polyphenylenether $B_2$ und Mischungen aus $B_1$ und $B_2$, die 55 bis 95 Gew.-% eines modifizierten Polyphenylenethers $B_2$ enthalten.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten, spezifischen Viskosität $\eta_{red}$ von 0,2 bis 0,9 dl/g, vorzugsweise von 0,35 bis 0,8, gemessen in einer 1 gew.-%igen Lösung in Chloroform bei 25°C.

Die unmodifizierten Polyphenylenether $B_1$ sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxyreste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Bevorzugte Polyphenylenether sind Poly(2,6-dilauryl-1,4-phenylen)ether, Poly(2,6-diphenyl-1,4-phenylen) ether, Poly(2,6-dimethoxy-1,4-phenylen)ether, Poly(2,6-diethoxy-1,4-phenylen)ether, Poly(2-ethyl-6-stearyloxy-1,4-phenylen)ether, Poly(2,6-dichlor-1,4-phenylen)ether, Poly(2-methyl-6-phenylen-1,4-phenylenether, Poly (2,6-dibenzyl-1,4-phenylen)ether, Poly(2-ethoxy-1,4-phenylen)ether, Poly(2-chlor-1,4-phenylen)ether, Poly (2,5-dibrom-1,4-phenylen)ether. Besonders bevorzugt werden Polyphenylenether eingesetzt, bei denen die Substituenten Alkylreste mit 1 bis 4 Kohlenstoffatomen sind, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Die erfindungsgemäßen Formmassen können zusätzlich Phasenvermittler (Komponente H) enthalten. Die Komponente H erhöht die Verträglichkeit zwischen Polyamid und Polyphenylenether und wird vorteilhaft in Mengen von 0,05 bis 30 Gew.%, bezogen auf die Summe der Komponenten $B_1$, $B_2$ und H, eingesetzt, insbesondere bei Verwendung eines unmodifizierten Polyphenylenethers $B_1$ in den erfindungsgemäßen Formmassen. Unter einem Phasenvermittler H wird eine Substanz verstanden, die das Mischen zweier nicht verträglicher Polymerisate erleichtert und die Haftung zwischen den Phasen in solchen Systemen verbessert (s. z.B. O. Olabisi, Polymer-Polymer Miscibility, Acad. Press 1979, Kap. 1). In der Praxis bedeutet dies, daß die Tendenz zur Delaminierung in mehrphasigen Polymersystemen reduziert wird. Solche Phasenvermittler für A und B sind an sich bekannt.

Weiterhin können als Phasenvermittler H 0,05 bis 15 Gew.-% bezogen auf die Summe von A bis D, eines Dienpolymeren eingesetzt werden. Als Dienpolymere kommen flüssiges Polybutadien, Polyisopren, Poly-1,3-pentadien oder deren Copolymere mit Styrol, $\alpha$-Methylstyrol und p-Hydroxystyrol mit einem Zahlenmittel des Molekulargewichtes von 150 bis 10000 in Betracht.

Als Komponente H können 0,05 bis 15 Gew.-%, bezogen auf die Summe der Komponenten A bis D, einer epoxidhaltigen Verbindung verwendet werden. Geeignet sind Epoxidharze aus Epichlorhydrin und Polyhydroxyphenolen wie Bisphenol A, Hydrochinon oder Resorcin sowie Glycidether-modifizierte Phenol- oder Kresolnovolake, Phenoxyharze. Weiterhin können Epoxidharze aus Epichlorhydrin und Polyhydroxyalkoholen wie Ethylen-, Propylen- oder Butylenglykol, Polyethylenglykol, Polypropylenglykol, Glycerin, Trimethylolethan und Pentaerythrit sowie Glycidether von Phenolen oder aliphatischen Alkoholen, Glycidylderivate von Aminen z.B. das Diglycidylderivat von Anilin verwendet werden. Außerdem können epoxidierte natürliche ungesättigte Öle und Epoxidierungsprodukte der oben erwähnten niedermolekularen Dienpolymeren eingesetzt werden.

Als Phasenvermittler H können zudem 0,05 bis 15 Gew.-% bezogen auf die Summe von A bis D, einer Verbindung, die im Molekül mindestens eine C-C-Doppel- oder -Dreifachbindung und mindestens eine Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe aufweist, eingesetzt werden. Solche Stoffe werden z.B. in der EP-A 24 120 beschrieben.

Geeignete Verbindungen sind z.B. Maleinsäureanhydrid, Maleinsäurehydrazid, Dichlormaleinsäureanhydrid, Maleinimid, Maleinsäure, Fumarsäure, deren Amide, Diamide, Monoester, Diester, Bisamide oder Bismaleinimide von $C_1$- bis $C_{20}$-Alkan- oder Arylendiaminen, natürliche Fette und Öle wie Sojabohnenöl, ungesättigte Säuren, wie Acrylsäure oder Methacrylsäure, deren Ester, Amide oder Anhydride, ungesättigte Alkohole, wie Allyl- oder Crotylalkohol, Methylvinylcarbinol oder Propargylalkohol, ungesättigte Amine wie Allyl- oder Crotylamin oder Addukte aus den Dienpolymeren und Maleinsäureanhydrid.

Als Phasenvermittler H kommen weiterhin vinylaromatische Polymere, deren Monomere zumindest teilweise eine Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe aufweisen, in Mengen von 2 bis 30, insbesondere 2 bis 15 Gew.%, bezogen auf die Summe der Komponenten A bis D, der erfindungsgemäßen Formmassen, in Betracht. Diese Polymeren werden durch Copolymerisation von vinylaromatischen Monomeren, wie Styrol, α-methylstyrol oder p-Methylstyrol mit den genannten copolymerisierbaren funktionalisierten Monomeren oder durch Aufpfropfen dieser Monomeren auf vinylaromatische Polymere wie Polystyrol erhalten. Solche Verträglichkeitsvermittler sind z.B. aus den Schriften EP-A 46 040, EP-A 147 874, EP-A 255 184, DE-A 3 535 273 oder DE-A 3 619 224 bekannt. Geeignet sind auch Styrolmaleinsäurecopolymere oder mit Maleinsäureanhydrid modifizierte, gegebenenfalls teilhydrierte Styrol-Butadien-Blockcopolymere.

Als Komponente H können weiterhin 0,05 bis 15 Gew.-% bezogen auf die Summe von A bis D, oxidierte Polyolefine gemäß EP-A 164 767 verwendet werden.

Ebenfalls geeignet sind 0,05 bis 10 Gew.-% Siliciumverbindungen, die im Molekül mindestens eine Si-O-C-Gruppe und eine C-C-Doppel-, C-C-Dreifachbindung oder eine nicht direkt an Si gebundene Amino- oder Merkaptogruppe aufweisen wie γ-Aminopropyl-triethoxy-silan oder Vinyl-tris-(2-methoxyethoxy)silan. Solche Verbindungen sind aus der EP-A 182 163 bekannt.

Funktionalisierte oder modifizierte Polyphenylenether $B_2$ sind an sich bekannt, z.B. aus WO-A 86/02086, WO-A 87/00540, EP-A-222 246, EP-A-223 116 und EP-A-254 048.

Üblicherweise wird der Polyphenylenether $B_1$ durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem Polyamid A gewährleistet ist. Der Phasenvermittler H wird somit durch die Modifizierung des Polyphenylenethers $B_1$ entbehrlich.

Die Modifizierung wird im allgemeinen durch polymeranaloge Umsetzung eines Polyphenylenethers $B_1$ mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei man Radikalstarter mitverwenden kann.

Geeignete Modifiziermittel sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen, die Mono- oder Diamine dieser Säuren wie N-Phenylmaleinimid, Maleinhydrazid, das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure.

Bevorzugt wird in den erfindungsgemäßen Formmassen als Komponente B ein modifizierter Polyphenylenether eingesetzt, der durch Umsetzung von
50 bis 99,95, insbesondere 71 bis 92 Gew.% Polyphenylenether $B_1$,
0 bis 35, insbesondere 1 bis 25 Gew.% eines vinylaromatischen Polymeren,
0,05 bis 10, insbesondere 0,3 bis 3 Gew.% Maleinsäure- oder Fumarsäuremonoester oder -diester mit $C_1$- bis $C_8$-Alkanolen wie Methanol oder Ethanol, Maleinsäure- oder Fumarsäuremonoamid oder -diamid, die am Stickstoff gegebenenfalls mit $C_1$-$C_8$-Alkylresten substituiert sein können, Maleinimid, Maleinsäure, Fumarsäure oder Maleinsäureanhydrid und
0 bis 5 Gew.%, insbesondere 0,02 bis 0,08 Gew.-% eines Radikalstarters
im Verlaufe von 0,5 bis 15 Minuten bei 240 bis 375°C in geeigneten Misch- und Knetaggregaten wie Zweischneckenextrudern erhältlich ist.

Das vinylaromatische Polymere ist bevorzugt mit dem Polyphenylenether $B_1$ verträglich. Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Genannt seien Polymere aus Styrol, Chlorstyrol, α-Methylstyrol und p-Methylstyrol; in untergeordneten Anteilen (vorzugsweise nicht mehr als 20, insbesondere nicht mehr als 8 Gew.%), können auch Comonomere wie Acrylnitril, Methacrylnitril, Acrylsäureester oder Methacrylsäureester am Aufbau beteiligt sein. Besonders bevorzugte vinylaromatische Polymere sind Polystyrol und schlagzäh modifiziertes Polystyrol. Selbstverständlich können auch Mischungen dieser Polymeren eingesetzt werden. Die Herstellung erfolgt vorzugsweise nach dem in der EP-A-302 485 beschriebenen Verfahren.

Als Radikalstarter seien genannt: Di(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Geeignet sind außerdem organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

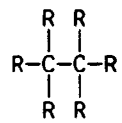

wobei die Reste R gleich oder verschieden sein können und Alkylgruppen mit 1 -8 C-Atomen, Alkoxygruppen mit 1 -8 C-Atomen, Arylgruppen wie Phenyl, Naphthyl oder 5- oder 6-gliedrige Heterocyclen mit einem π-Elektronensystem und Stickstoff, Sauerstoff oder Schwefel als Heteroatomen bedeuten. Die Substituenten R können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Die Komponente $B_1$ kann bis zu 40 Gew.-% eines vinylaromatischen Polymeren in Mischung enthalten.

Als Komponente C enthalten die erfindungsgemäßen Formmassen 0,1 bis 15, vorzugsweise 0,1 bis 10 und insbesondere 0,1 bis 5 Gew.% eines thermotropen, flüssigkristallinen Polymeren. Als thermotrope, flüssigkristalline Polymere bezeichnet man solche Polymere, die sogenannte flüssigkristalline Schmelzen mit anisotropen Eigenschaften bilden. Den flüssigkristallinen Charakter der Schmelzen solcher Polymerer kann man durch ihre Scheropaleszenz, die optische Untersuchung zwischen gekreuzten Polarisatoren (vgl. DE 25 20 819) oder den stark scherabhängigen Verlauf der Schmelzviskosität nachweisen.

Als thermotrope, flüssigkristalline Polymere C, die oberhalb 200°C eine optisch anisotrope Schmelze bilden, werden erfindungsgemäß vorzugsweise vollaromatische Polyester, Polyesteramide, Polyetherester, Polyesterimide, Polyazomethine, Polyamide, Polyurethane, aromatisch-aliphatische Polyester oder aromatisch-aliphatische Polyesteramide eingesetzt.

Repräsentative Beispiele für vollaromatische Polyester mit den geeigneten thermotropen flüssigkristallinen Eigenschaften werden in den folgenden US-Patentschriften beschrieben: 3 991 013; 4 156 070; 4 226 970; 4 256 624; 4 412 058; 4 500 699.

Weitere erfindungsgemäß einsetzbare vollaromatische Polyester werden in den DE-OS 35 17 270; 35 17 948; 33 38 623 beschrieben. Bevorzugt werden dabei die vollaromatischen Polyester eingesetzt, deren Polymerketten sich aus aromatischen Dicarbonsäuren, aromatischen Diolen und/oder aromatischen Hydroxycarbonsäuren aufbauen. Im allgemeinen muß die Mehrzahl der die aromatischen Polymeren aufbauenden Monomeren einen gestreckten Aufbau haben wie z.B. in para-disubstituierten Benzolderivaten, 4,4′-disubstituierten Biphenylderivaten oder in Naphthalinderivaten; ein Teil der aufbauenden Einheiten muß allerdings entweder vom gestreckten Aufbau abweichen (z.B. im Falle metasubstituierter Benzolderivate) oder bei gestrecktem Aufbau laterale Substituenten tragen.

Repräsentative Beispiele für vollaromatische Polyesteramide, die erfindungsgemäß eingesetzt werden können, werden in den US-Patentschriften 43 30 457; 43 51 917; 43 51 918 und 43 41 688 beschrieben.

Repräsentative Beispiele für aromatisch-aliphatische Polyester mit thermotropen flüssig-kristallinen Eigenschaften umfassen auch Copolymere aus Hydroxybenzoesäure und Polyalkylenterephthalat, wie sie in den US-Patentschriften 38 04 805; 41 38 842 und 43 55 133 beschrieben werden.

Repräsentative Beispiele für erfindungsgemäß einsetzbare aromatischaliphatische Polyester werden in der JP-A 5 81 76 216 beschrieben.

Die vollaromatischen oder aromatisch-aliphatischen Polyester bzw. Polyesteramide können an ihren Polymerketten noch andere funktionelle Gruppen aufweisen, wie Imid-, Carbonat-, Harnstoff-, Ether-, Keto-, Sulfid-, Sulfon- oder Azogruppen. Sie können ferner an den aromatischen Einheiten durch Halogenatome oder Alkylreste, insbesondere Alkylreste mit 1 bis 4 Kohlenstoffatomen, substituiert sein.

Neben den wesentlichen Komponenten A, B und C können die erfindungsgemäßen Formmassen 0 bis 25, bevorzugt 1 bis 15 und insbesondere 3 bis 12 Gew.-% eines kautschukelastischen Polymerisates enthalten. Es können übliche Schlagzähmodifier D verwendet werden, die für Polyamide (Komponente A) geeignet sind und Kautschuke D, die üblicherweise Polyphenylenether (Komponente B) schlagzäh modifizieren.

Als kautschukelastische Polymerisate D für Polyamide A werden solche bevorzugt, die an der Oberfläche reaktive Gruppen aufweisen.

Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel

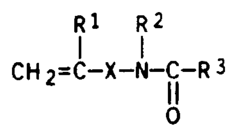

eingeführt werden können,
wobei die Substituenten folgende Bedeutung haben können:

$R^1$ Wasserstoff oder eine $C_1$-$C_4$-Alkylgruppe,

$R^2$ Wasserstoff, eine $C_1$-$C_8$-Alkylgruppe oder eine Arylgruppe, insbesondere Phenyl,

$R^3$ Wasserstoff, eine $C_1$-$C_{10}$-Alkyl-, eine $C_6$-$C_{123}$-Arylgruppe oder $OR^4$, worin $R^4$ eine $C_1$-$C_8$- oder $C_6$-$C_{12}$-Arylgruppe ist, die gegebenenfalls mit O- oder N-haltigen Gruppen substituiert sein kann,

X eine chemische Bindung, eine $C_1$-$C_{10}$-Alkylen- oder $C_6$-$C_{12}$-Arylengruppe oder

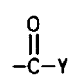

worin Y entweder O-Z- oder NH-Z bedeutet und Z eine $C_1$-$C_{10}$-Alkylen- oder $C_6$-$C_{12}$-Arylengruppe sein kann.

Auch die in der EP-A 208 187 beschriebenen Pfropfmonomeren sind zur Einführung reaktiver Gruppen an der Oberfläche geeignet.

Beispiele für Monomere, mit denen die erwähnten funktionellen Gruppen eingeführt werden können, sind Methacrylsäureglycidylester, Acrylsäureglycidylester, Allylglycidylether, Vinylglycidylether, Itaconsäureglycidylester, Acrylsäure, Methacrylsäure und ihre Metall-, insbesondere Alkalimetall- und Ammoniumsalze, Maleinsäure, Fumarsäure, Itaconsäure, Vinylbenzoesäure, Vinylphthalsäure, Monoester dieser Säuren mit $C_1$-$C_{30}$-Alkoholen wie Methyl-, Ethyl-, Propyl-, Isopropyl-, n-Butyl-, i-Butyl-, Hexyl-, Cyclohexyl-, Octyl-, 2-Ethylhexyl-, Decyl-, Stearyl-, Methoxyethyl-, Ethoxyethyl- oder Hydroxyethylalkohol. Maleinsäureanhydrid sowie Ester der Acrylsäure oder Methacrylsäure mit tertiären Alkoholen, z.B. tert.-Butylacrylat, weisen zwar keine freien Carboxylgruppen auf, kommen in ihrem Verhalten aber den freien Säuren nahe und werden deshalb als Monomere mit latenten Säuregruppen bezeichnet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Der Anteil der von den vorstehend aufgeführten Monomeren abgeleiteten Gruppen beträgt im allgemeinen 0,5 bis 40, vorzugsweise 0,5 bis 25 Gew.% bezogen auf das Gesamtgewicht des Kautschuks.

Diese Monomeren können entweder mit den anderen Monomeren bereits bei der Herstellung des Kautschuks copolymerisiert werden oder aber auf einen bereits fertig vorliegenden, nicht modifizierten Kautschuk aufgepfropft werden, und zwar vorzugsweise unter Mitverwendung von Radikalstartern.

Bei den Kautschuken handelt es sich im allgemeinen um Polymerisate, die bevorzugt aus mindestens zwei der folgenden Monomeren als Hauptkomponenten aufgebaut sind: Ethylen, Propylen, Butadien, Isobuten, Isopren, Chloropren, Vinylacetat, Styrol, Acrylnitril, Acrylsäure, Methacrylsäure und Acryl- und Methacrylsäureester mit 1 bis 18 C-Atomen in der Alkoholkomponente.

Als erste bevorzugte Gruppe sind die sogenannten Ethylen-Propylen (EPM) bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (ML1+4/100°C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt im allgemeinen 0,5 bis 50, insbesondere 3 bis 15 Gew.%, bezogen auf das Gesamtgewicht des Kautschuks.

EPM- bzw. EPDM-Kautschuke werden üblicherweise mit den oben genannten, reaktive Gruppen tragenden Monomeren gepfropft. Hier seien nur Acrylsäure, Methacrylsäure und deren Derivate sowie Maleinsäureanhydrid genannt.

Eine weitere Gruppe von Kautschuken sind Copolymere mit Estern der Acryl- bzw. Methacrylsäure, z.B. mit den Methyl-, Ethyl-, Propyl-, n-, i- bzw. t-Butyl- und 2-Ethylhexylestern. zusätzlich können die Kautschuke noch die oben genannten reaktiven Gruppen z.B. in Form von Dicarbonsäuren, Derivate dieser Säuren, Vinylestern und -ethern enthalten.

Der Ethylengehalt der Copolymeren liegt im allgemeinen im Bereich von 50 bis 98 Gew.%, der Anteil an Epoxidgruppen enthaltenden Monomeren und der Anteil des Acrylsäure- und/oder Methacrylsäureesters jeweils im Bereich von 1 bis 49 Gew.%.

Bevorzugt sind Olefinpolymerisate aus

| | |
|---|---|
| 50 bis 98,9 | insbesondere 60 bis 95 Gew.% Ethylen, |
| 0,1 bis 20, | insbesondere 0,15 bis 15 Gew.% Glycidylacrylat und/oder Glycidylmethacrylat, Acrylsäure und/oder Maleinsäure anhydrid, |
| 1 bis 45, | insbesondere 10 bis 35 Gew.% n-Butylacrylat und/oder 2-Ethylhexylacrylat. |

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind allgemein bekannt.

Der Schmelzindex der Ethylencopolymeren liegt im allgemeinen im Bereich von 1 bis 80 g/10 min (gemessen bei 190°C und 2,16 kg Belastung).

Geeignete Elastomere zur Schlagzähmodifizierung von Polyamid sind weiterhin reaktive Gruppen enthaltende Pfropfcopolymerisate mit Butadien, Butadien/Styrol-, Butadien/Acrylnitril- und Acrylesterkautschuken als Pfropfgrundlage, wie sie z.B. in den DE-A 16 94 173, DE-A 23 48 377, DE-A 24 44 584 und DE-A 27 26 256 beschrieben werden. Von diesen seien die sogenannten ABS-Polymerisate erwähnt, wie sie in den DE-A-20 35 390, DE-A-22 48 242 und der EP-A-22 216 beschrieben werden.

Derartige Pfropfpolymerisate sind vorzugsweise aus

| | |
|---|---|
| 25 bis 98 Gew.% | eines Acrylatkautschuks mit einer Glasübergangstemperatur von unter -20°C als Pfropfgrundlage (Basispolymer) und |
| 2 bis 75 Gew.% | eines copolymerisierbaren ethylenisch ungesättigten Monomeren, dessen Homo- bzw. Copolymerisate eine Glasübergangstemperatur von mehr als 25°C aufweisen, als Pfropfauflage (Pfropfhülle) |

aufgebaut.

Die Pfropfgrundlage ist ein Acrylat oder Methacrylatkautschuk, wobei bis zu 40 Gew.% weiterer Comonomerer enthalten sein können. Die $C_1$-$C_8$-Ester der Acrylsäure bzw. Methacrylsäure sowie deren halogenierte Derivate wie auch aromatische Acrylsäureester und deren Mischungen werden üblicherweise eingesetzt. Als Comonomere in der Pfropfgrundlage seien Acrylnitril, Methacrylnitril, Styrol, $\alpha$-Methylstyrol, Acrylamide, Methacrylamide sowie Vinyl-$C_1$-$C_6$-Alkylether angeführt.

Die Pfropfgrundlage kann unvernetzt oder teilweise oder vollständig vernetzt sein. Die Vernetzung wird z.B. durch Copolymerisation von vorzugsweise 0,02 bis 5 Gew.%, insbesondere 0,05 bis 2 Gew.% eines vernetzenden Monomeren mit mehr als einer Doppelbindung erzielt. Geeignete vernetzende Monomere werden z.B. in der DE-A 27 26 256 und der EP-A 50 265 beschrieben.

Bevorzugte vernetzende Monomere sind Triallylcyanurat, Triallylisocyanurat, Triacryloylhexahydro-s-triazin und Triallylbenzole.

Falls die vernetzenden Monomeren mehr als 2 polymerisierbare Doppelbindungen aufweisen, ist es vorteilhaft, ihre Menge auf nicht mehr als 1 Gew.% bezogen auf die Pfropfgrundlage, zu beschränken.

Gut geeignete Pfropfgrundlagen sind Emulsionspolymerisate mit einem Gelgehalt von mehr als 60 Gew.% (bestimmt in Dimethylformamid bei 25°C nach M. Hoffmann, H. Krömer, R. Kuhn, Polymeranalytik, Georg-Thieme-Verlag, Stuttgart, 1977).

Ebenfalls geeignet als Pfropfgrundlage sind Acrylat-Kautschuke mit einem Dienkern, wie sie z.B. in der EP-A 50 262 beschrieben werden.

Als Pfropfmonomere eignen sich besonders Styrol, α-Methylstyrol, Acrylnitril, Methacrylnitril und Methylmethacrylat oder deren Mischungen, insbesondere solche aus Styrol und Acrylnitril im Gewichtsverhältnis von 1:1 bis 9:1.

Die Einführung der reaktiven Gruppen in Pfropfcopolymerisate kann z.B. durch Mitverwendung der entsprechenden Monomeren bei der Herstellung der Pfropfhülle erfolgen. In diesem Fall beträgt deren Anteil an der Pfropfmonomermischung vorzugsweise 0,5 bis 30, insbesondere 1 bis 25 Gew.%. Es ist auch möglich, die entsprechenden Monomeren als letzte Pfropfhülle getrennt aufzubringen.

Die Pfropfausbeute, d.h. der Quotient aus der Menge des aufgepfropften Monomeren und der Menge des eingesetzten Pfropfmonomeren liegt im allgemeinen im Bereich von 20 bis 90 %.

Als weitere Kautschuke sind solche zu nennen, die den Polyphenylenether (Komponente B) schlagzäh modifizieren.

Beispielhaft seien thermoplastische Kautschuke, wie Polybutadien-, Polybuten-, Polyisopren-, Acrylnitrilbutadien-, Ethylenpropylen-, Polyester- oder Ethylenkautschuke und elastomere Copolymere aus Ethylen und Estern der Acrylsäure oder Methacrylsäure, z.B. Ethylenbutylacrylatcopolymere erwähnt. Weiterhin seien genannt Ionomere, Polyoctenylene, Pfropfkautschuke mit einem Pfropfkern aus Butadien oder Isopren oder Alkylacrylaten oder Alkylmethacrylaten und einer Pfropfhülle aus Styrol oder/und α-Methylstyrol sowie vorzugsweise Styrol-Butadien-Blockcopolymere einschließlich AB-, ABA-, und ABAB-Blockcopolymere, die auch verschmierte Übergänge haben können, Sternblockcopolymere und ähnliche, analoge Isoprenblockcopolymerisate und (teil)hydrierte Blockcopolymerisate. Diese Kautschuke können auch in mit vinylaromatischen Monomeren wie Styrol gepfropfter Form eingesetzt werden (EP-A 234 063 und US-A 4 681 915).

Die Kautschuke D weisen vorzugsweise eine Glasübergangstemperatur von unter -30°C, insbesondere von unter -40°C auf. Selbstverständlich können auch Mischungen der vorstehend aufgeführten Kautschuktypen eingesetzt werden.

Die erfindungsgemäßen Formmassen können 0 bis 20 Gew.-% eines weiteren Polymeren (Komponente E) enthalten. Genannt seien Polyethylen, Polypropylen, Styrol-Acrylnitril-Copolymere mit einem Acrylnitrilgehalt größer als 20 Gew.-% Polymethylmethacrylat, Polycarbonat, Polybutylenterephthalat, Polyethylenterephthalat, Polysulfon, Polyethersulfon.

Als weiteren Bestandteil können die erfindungsgemäßen Formmassen 0 bis 50, vorzugsweise 0 bis 30 und insbesondere 10 bis 30 Gew.-% eines faser- oder teilchenförmigen Füllstoffes (Komponente F) oder deren Mischungen enthalten.

Bevorzugte faserförmige Verstärkungsstoffe (Komponente F) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (Komponente A) oder dem Polyphenylenether (Komponente B) mit einer Schlichte und einem Haftvermittler ausgerüstet sein. Im allgemeinen haben die verwendeten Glasfasern einen Durchmesser im Bereich von 6 bis 20 μm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe F eignen sich amorphe Kieselsäure, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Die erfindungsgemäßen Formmassen können weiterhin Flammschutzmittel G in einer Konzentration von 0 bis 20 Gew.%, bevorzugt von 0 bis 12,5 Gew.%, bezogen auf das Gesamtgewicht der Formmasse, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2′,6′-Tetrabrombisphenols A der Tetrabromphthalsäure, des 2,6-Dibromphenols und 2,4,6-Tribromphenols und deren Derivate.

Bevorzugtes Flammschutzmittel G ist elementarer Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist weiterhin 1,2,3,4,7,8,9,10,13,13,14,14-Dodecachloro-1,4,4a,5,6,6a,7,10,10a, 11,12,12a-dodecahydro-1,4:7,10-dimethanodibenzo(a,e)-cyclooctan und gegebenenfalls einem Synergisten z.B. Antimontrioxid.

Weitere Phosphorverbindungen wie organische Phosphorsäure, Phosphinate, Phosphonate, Phosphinite, Phosphinoxide, Phosphine, Phosphite oder Phosphate sind ebenfalls bevorzugt. Als Beispiel sei Triphenylphosphinoxid genannt. Dieses kann allein oder in Mischung mit rotem Phosphor verwendet werden.

Beispiele für bevorzugte Phosphorverbindungen sind Phosphorsäureester oder partielle Phosphorsäureester mit gleichen oder verschiedenen Kohlenwasserstoffresten wie Alkyl, Cycloalkyl, Aryl, alkylsubstituiertes Aryl und arylsubstituiertes Alkyl. Bis zu zwei Estergruppen können durch Halogen oder Wasserstoff oder deren Kombinationen ersetzt sein, vorausgesetzt, daß mindestens eine weitere Estergruppe mit einem aromatischen Alkohol vorhanden ist.

Beispiele solcher geeigneter Phosphate sind Phenylbisdodecylphosphat, Phenylbisneopentylphosphat, Phenylethylenhydrogenphosphat, Phenyl-bis-(3,5,5′-trimethylhexylphosphat) Ethyldiphenylphosphat, 2-Ethylhexyldi(p-tolyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind Ester mit ausschließlich aromatischen Alkoholen. Das am meisten bevorzugte Phosphat ist Triphenylphosphat. Weiter ist die Kombination von Triphenylphosphat mit rotem Phosphor bevorzugt.

Als Flammschutzmittel sind auch solche Verbindungen geeignet, die Phosphor-Stickstoff-Bindungen enthalten, wie Phosphonnitrilchlorid, Phosphorsäureesteramide, Phosphorsäureesteramine, Phosphorsäureamide, Phosphonsäureamide, Phosphinsäureamide, Tris(N-Aziridinyl)-phosphinoxid oder Tetrakis(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N′-Ethylenbistetrabromphthalimid Bedeutung erlangt.

Neben den wesentlichen Komponenten A, B und C sowie gegebenenfalls D bis G können die erfindungsgemäßen Formmassen übliche Zusatzstoffe und Verarbeitungshilfsmittel enthalten. Deren Anteil beträgt im allgemeinen bis zu 20, vorzugsweise bis zu 10 Gew.-% bezogen auf das Gesamtgewicht der Komponenten A bis G.

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Materialien zur Erhöhung der Abschirmung gegen elektromagnetische Wellen, wie Metallflocken, -pulver, -fasern, metallbeschichtete Füllstoffe und leitfähige Polymere können mitverwendet werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern vorzugsweise Zweischneckenextruder, Brabender-Mühlen oder Banburry-Mühlen mischt und anschließend extrudiert. Nach der Extrusion wird das Extrudat abgekühlt und zerkleinert.

Um eine möglichst homogene Formmasse zu erhalten, ist eine intensive Durchmischung notwendig. Dazu sind im allgemeinen mittlere Mischzeiten von 0,2 bis 30 Minuten bei Temperaturen von 280 bis 380°C erforderlich. Die Abmischreihenfolge der Komponenten kann variiert werden, so können zwei oder ggf. drei Komponenten vorgemischt werden, es können aber auch alle Komponenten gemeinsam gemischt werden. Wird die Komponente $B_2$ eingesetzt, so kann es von Vorteil sein, den modifizierten Polyphenylenether $B_2$ in einer ersten Zone eines Extruders herzustellen und in einer oder mehreren nachfolgenden Zonen des Extruders mit den übrigen Komponenten der erfindungsgemäßen Formmasse zu vermischen. Ein solches Verfahren ist in der DE-A 37 02 582 beschrieben.

Erfindungsgemäße Massen können auch durch einen Pultrusionsvorgang hergestellt werden, wie er in der EP-A-56 703 beschrieben ist. Dabei wird der Glasfaserstrang mit der Polymermasse durchtränkt und anschließend abgekühlt und zerkleinert. Die Glasfaserlänge ist in diesem Fall identisch mit der Granulatlänge und liegt zwischen 3 und 20 mm.

Die erfindungsgemäßen Formmassen sind gut verarbeitbar. Daraus herstellbare Formkörper zeichnen sich durch eine erhöhte multiaxiale Zähigkeit, eine erhöhte Wärmeformbeständigkeit und eine verringerte Wasseraufnahme aus. Bei glasfaserverstärkten Formmassen wird die Oberflächenqualität verbessert.

Infolge dieses Eigenschaftsspektrums eignen sich die aus den erfindungsgemäßen Formmassen herstellbaren Formkörper besonders für Karosserieteile und Funktionsteile im Motorbereich von Kraftfahrzeugen sowie für den Elektrosektor.

Füllstoffhaltige bzw. verstärkte Formkörper werden vor allem als Radblenden verwendet.

Beispiele 1 bis 8

Folgende Komponenten wurden für verschiedene Mischungen verwendet:

Komponente A

A/1: Polyamid 6, Zahlenmittel des Molekulargewichts $\overline{M}_n$ = 18000

A/2: Polyamid 6,6, $\overline{M}_n$ = 22000

Komponente B

$B_1$: 90 Gew.-% Poly-(2,6-dimethyl-1,4-phenylen)ether mit einer reduzierten, spezifischen Viskosität von 0,60 dl/g (1 gew.%ig in $CHCl_3$ bei 25°C) und 10 Gew.-% Polystyrol.

$B_2$: 90 Gew.-% Poly-(2,6-dimethyl-1,4-phenylen)ether mit einer reduzierten spezifischen Viskosität von 0,60 dl/g (1 gew.-%ig in $CHCl_3$ bei 25°C) und 8 Gew.-% Polystyrol (Schmelzflußindex MFI bei 200°C/5 kg Belastung = 24 g/10 min), 1,95 Gew.-% Fumarsäure und 0,05 Gew.-% 3,4-Dimethyl-3,4-diphenylhexan wurden in einem Zweischneckenextruder (ZSK 30, Fa. Werner & Pfleiderer) dosiert, in einem ersten Teil unter Verwendung von Knetelementen bei 270°C aufgeschmolzen, in einem zweiten Teil unter Kneten und Verwendung von Knetelementen bei 280°C umgesetzt und anschließend in einer Entgasungszone bei 300°C unter Anlegen von Vakuum entgast. Die mittlere Verweilzeit im Extruder betrug 1,5 min.

Komponente C

C/1: Ein 11 l-Rührautoklav wurde mit 1328 g Terephthalsäure, 1437 g p-Hydroxybenzoesäure, 308 g Hydrochinon, 298 g 4,4'-Dihydroxybiphenyl, 576 g 2,7-Dihydroxynaphthalin sowie 3650 g Essigsäureanhydrid beschickt. Unter Stickstoffatmosphäre rührte man zunächst 30 Minuten bei 130°C und steigerte anschließend innerhalb von 4 Stunden die Temperatur auf 290°C. Bei dieser Temperatur wurde innerhalb einer Stunde der Druck auf 25 mbar reduziert und dann noch 10 Minuten weitergerührt. Die erhaltene hochviskose, fadenbildende Polymerschmelze wurde durch eine Bodendüse ausgepreßt und nach Abkühlen in einem Wasserbad granuliert. Das Polymere hatte eine Glasumwandlungstemperatur von 122°C.

C/2: Vollaromatische Polyester mit 73 Mol-% 4-Oxy-benzoyl- und 27 Mol-% 6-Oxy-2-naphtholyl-Einheiten (Vectra®A 900 der Fa. Hoechst Celanese)

Komponente D

D/1: Styrol-Butadien-Styrol-Dreiblockcopolymer mit einem Styrolgehalt von 30 Gew.-% (Cariflex® TR 1102 der Fa. Shell);

D/2: Zweiblockcopolymeres aus Styrol und hydriertem Polyisoprenblock (35 Gew.% Styrolgehalt; Kraton®G

1702 der Fa. Shell).

D/3: Terpolymeres aus 70 % Ethylen, 25 % n-Butylacrylat und 5 % Acrylsäure

Herstellung der Formteile

Die Komponenten gemäß Tabelle 1 wurden auf einem Zweischneckenextruder (40 mm Schneckendurchmesser) bei einer Zylindertemperatur von 280°C gemischt. Der Schmelzstrang wurde durch ein Wasserbad geführt und granuliert. Das getrocknete Granulat wurde bei 300°C zu Rundscheiben (60x2 mm) und bei 280°C zu Schulterstäben und Normkleinstäben gespritzt. Die Kerbschlagzähigkeit $a_k$ (Charpy) wurde nach DIN 53453, die Durchstoßarbeit DSA nach DIN 53443, der Zugmodul $E_Z$ nach DIN 53457, die Fliefähigkeit MVI nach DIN 57735 (bei 275°C und 10 kg), die Wärmeformbeständigkeit HDT nach ISO 75 A und die Wasseraufnahme (bei 70°C; 62 % relative Feuchtigkeit; nach 8 Tagen Lagerzeit) in Anlehnung an ISO 1110 bestimmt. Die Oberflächenqualität wurde visuell an Rundscheiben vergleichend beurteilt.

Die Zusammensetzung der Formmassen und die Ergebnisse sind den Tabellen 1 und 2 zu entnehmen.

Die Beispiele der Tab. 1 zeigen, daß der Zusatz der erfindungsgemäßen Komponente C zu einer Verbesserung hinsichtlich der Durchstoßarbeit, der Wärmeformbeständigkeit, der Fließfähigkeit und der Wasseraufnahme führt.

In verstärkten oder gefüllten Einstellungen (Tab. 2) verbessert der zusatz der Komponente C zusätzlich die Oberflächeneigenschaften.

Tabelle 1

| Nr. | Zusammensetzung ** [Gew.-%] | | | | | | | | Eigenschaften | | | | | |
|---|---|---|---|---|---|---|---|---|---|---|---|---|---|---|
| | A | | B | | C | | D | | $a_k$ kJ/m² | DSA Nm | $E_Z$ N/mm² | MVI g/10' | HDT °C | Wasseraufnahme % |
| 1 | A/2 | 43,8 | $B_1$ | 25,8 | C/1 | 0,3 | D/1 | 10 | 25 | 49 | 2380 | 64 | 103 | 1,0 |
| | | | $B_2$ | 19,8 | | | | | | | | | | |
| 2 | A/2 | 43,6 | $B_1$ | 25,7 | C/1 | 0,8 | D/1 | 9,9 | 25 | 53 | 2380 | 67 | 119 | 0,9 |
| | | | $B_2$ | 19,7 | | | | | | | | | | |
| 3 | A/2 | 43,4 | $B_1$ | 25,6 | C/1 | 1,5 | D/1 | 9,7 | 24 | 57 | 2360 | 87 | 131 | 0,85 |
| | | | $B_2$ | 19,6 | | | | | | | | | | |
| 4 | A/1 | 47,4 | $B_2$ | 39,5 | C/1 | 1 | D/2 | 7,9 | 35 | 55 | 2090 | 90 | 115 | 1,0 |
| | | | | | | | D/3 | 3,9 | | | | | | |
| 5* | A/2) | 43,9 | $B_1$ | 25,9 | - | | D/1 | 10 | 24 | 40 | 2370 | 52 | 90 | 1,15 |
| | | | $B_2$ | 19,9 | | | | | | | | | | |

* Vergleichsversuche

** alle Zusammensetzungen enthalten zusätzlich 0,3 % eines phenolischen Antioxidans

Tabelle 2

| Nr. | Zusammensetzung [Gew.-%] | | | | | | | | E** | Eigenschaften | | Oberfläche |
|---|---|---|---|---|---|---|---|---|---|---|---|---|
| | A | | B | | C | | D | | | $a_k$ kJ/m² | $E_Z$ N/mm² | |
| 6 | A/2 | 32 | $B_2$ | 32 | C/2 | 0,7 | D/2 | 5,5 | 29,8 | 14 | 9000 | glatt, einheitlicher Farbeindruck |
| 7* | A/2 | 31,8 | $B_2$ | 31,8 | - | | D/2 | 5,4 | 29,6 | 12 | 9000 | rauh, fleckig |

* Vergleichsversuche

** Glasfaser als Roving eingearbeitet; Faser: mit Polyurethanschlichte, Faserdurchmesser: 12 µm.

## Patentansprüche

1. Thermoplastische Formmassen, enthaltend

| | |
|---|---|
| A) 5 bis 95,9 Gew.-% | eines thermoplastischen Polyamids (Komponente A), |
| B) 4 bis 80 Gew.-% | einer Komponente auf Basis eines Polyphenylenethers, die bis zu 40 Gew.-% eines vinylaromatischen Polymeren in Mischung enthalten kann (Komponente B), |
| C) 0,1 bis 15 Gew.-% | eines thermotropen, flüssigkristallinen Oligomeren oder Polymeren (Komponente C), |
| D) 0 bis 25 Gew.-% | eines kautschukelastischen Polymerisats (Komponente D) und |
| E) 0 bis 20 Gew.% | eines weiteren Polymeren (Komponente E). |

2. Thermoplastische Formmassen nach Anspruch 1, enthaltend zusätzlich pro Gew.-Teil bis zu 0,5 Gew.-Teile eines faser- oder teilchenförmigen Füllstoffes oder deren Mischungen (Komponente F) und bis zu 0,2 Gew.-Teile eines Flammschutzmittels (Komponente G).

3. Thermoplastische Formmassen nach Anspruch 1, enthaltend

| | |
|---|---|
| 15 bis 94,9 Gew.-% | der Komponente A |
| 4 bis 60 Gew.-% | der Komponente B |
| 0,1 bis 10 Gew.-% | der Komponente C |
| 1 bis 15 Gew.-% | der Komponente D. |

4. Thermoplastische Formmassen nach Anspruch 1 oder 2, enthaltend

| | |
|---|---|
| 5 bis 93,9 Gew.-% | der Komponente A |
| 6 bis 55 Gew.-% | der Komponente B |
| 0,1 bis 5 Gew.-% | der Komponente C |
| 0 bis 25 Gew.-% | der Komponente D und |
| 0 bis 30 Gew.-% | der Komponente F. |

5. Thermoplastische Formmassen nach den Ansprüchen 1 bis 4, enthaltend als Komponente B eine Mischung von

| | |
|---|---|
| 70 bis 99,95 Gew.-% | eines unmodifizierten Polyphenylenethers (Komponente $B_1$) und |
| 0,05 bis 30 Gew.-% | eines Phasenvermittlers (Komponente H). |

6. Thermoplastische Formmasse nach den Ansprüchen 1 bis 4, enthaltend als Komponente B einen modifizierten Polyphenylenether (Komponente $B_2$).

7. Thermoplastische Formmassen nach Anspruch 6, in denen der modifizierte Polyphenylenether $B_2$ durch Umsetzung von

| | |
|---|---|
| $b_1$) 70 bis 99,9 Gew.-% | eines Polyphenylenethers, |
| $b_2$) 0 bis 20 Gew.-% | eines vinylaromatischen Polymeren, |
| $b_3$) 0,1 bis 30 Gew.% | einer ethylenisch ungesättigten Verbindung mit mindestens einer Epoxidgruppe, Aminogruppe, Carbonsäure-, Carbonsäureanhydrid-, -ester-, -amid- oder -imidgruppe und |
| $b_4$) 0 bis 5 Gew.-% | eines Radikalstarters, |

im Verlaufe von 0,2 bis 15 Minuten bei 240 bis 375°C hergestellt wurde.

8. Thermoplastische Formmassen nach den Ansprüchen 1 bis 7, enthaltend als thermotrope, flüssigkristalline Oligomere oder Polymere aromatische Polyester mit Flüssigkristallinität bei 200 bis 360°C.

9. Verwendung der thermoplastischen Formmassen gemäß den Ansprüchen 1 bis 8 zur Herstellung von Formkörpern.

10. Formkörper, erhältlich aus den thermoplastischen Formmassen gemäß den Ansprüchen 1 bis 8.

## Claims

1. A thermoplastic molding composition containing

A) from 5 to 95. 9 % by weight of a thermoplastic polyamide (component A),
B) from 4 to 80 % by weight of a component based on a polyphenylene ether, which may contain up to 40 % by weight of a vinyl-aromatic polymer in the mixture (component B),
C) from 0.1 to 15 % by weight of a thermotropic, liquid-crystalline oligomer or polymer (component C),
D) from 0 to 25 % by weight of a rubber-elastic polymer (component D) and
E) from 0 to 20 % by weight of a further polymer (component E).

**2.** A thermoplastic molding composition as claimed in claim 1, additionally containing, per part by weight, up to 0.5 part by weight of a fibrous or particulate filler or a mixture thereof (component F), and up to 0.2 part by weight of a flameproofing agent (component G).

**3.** A thermoplastic molding composition as claimed in claim 1, containing

| | |
|---|---|
| from 15 to 94.9 % | by weight of component A |
| from 4 to 60 % | by weight of component B |
| from 0.1 to 10 % | by weight of component C |
| from 1 to 15 % | by weight of component D. |

**4.** A thermoplastic molding composition as claimed in claim 1 or 2, containing

| | |
|---|---|
| from 5 to 93.9 % | by weight of component A |
| from 6 to 55 % | by weight of component B |
| from 0.1 to 5 % | by weight of component C |
| from 0 to 25 % | by weight of component D and |
| from 0 to 30 % | by weight of component F. |

**5.** A thermoplastic molding composition as claimed in any of claims 1 to 4, containing, as component B, a mixture of
from 70 to 99.95 % by weight of an unmodified polyphenylene ether (component $B_1$) and
from 0.05 to 30 % by weight of a phase-compatibility promoter (component H).

**6.** A thermoplastic molding composition as claimed in any of claims 1 to 4, containing, as component B, a modified polyphenylene ether (component $B_2$).

**7.** A thermoplastic molding composition as claimed in claim 6, in which the modified polyphenylene ether $B_2$ has been prepared by reacting
$b_1$) from 70 to 99.9 % by weight of a polyphenylene ether,
$b_2$) from 0 to 20 % by weight of a vinyl-aromatic polymer,
$b_3$) from 0.1 to 30 % by weight of an ethylenically unsaturated compound containing at least one epoxide, amino, carboxylic acid, carboxylic anhydride, carboxylic acid ester, carboxamide or carboximide group and
$b_4$) from 0 to 5 % by weight of a free-radical initiator, for from 0.2 to 15 minutes at from 240 to 375°C.

**8.** A thermoplastic molding composition as claimed in any of claims 1 to 7, containing, as the thermotropic, liquid-crystalline oligomer or polymer, an aromatic polyester having liquid crystallinity at from 200 to 360°C.

**9.** The use of a thermoplastic molding composition as claimed in any of claims 1 to 8 for producing moldings.

**10.** A molding obtainable from a thermoplastic molding composition as claimed in any of claims 1 to 8.

## Revendications

**1.** Masses à mouler thermoplastiques, contenant

| | |
|---|---|
| A) 5 à 95,9% | en poids d'un polyamide thermoplastique (composant A), |
| B) 4 à 80% | en poids d'un composant à base d'un poly(oxyphénylène), qui peut contenir en mélange jusqu'à 40% en poids d'un polymère vinylaromatique (composant B), |
| C) 0,1 à 15% | en poids d'un oligomère ou d'un polymère cristallin liquide thermotrope (composant C), |

D) 0 à 25% en poids d'un polymère ayant l'élasticité du caoutchouc (composant D) et
E) 0 à 20% en poids d'un autre polymère (composant E).

2. Masses à mouler thermoplastiques selon la revendication 1, contenant en plus, par partie en poids, jusqu'à 0,5 partie en poids d'une charge en forme de fibres ou de particules ou de mélanges de telles charges (composant F) et jusqu'à 0,2 partie en poids d'un agent retardant les flammes (composant G).

3. Masses à mouler thermoplastiques selon la revendication 1, contenant
15 à 94,9 % en poids du composant A,
4 à 60 % en poids du composant B,
0,1 à 10 % en poids du composant C,
1 à 15 % en poids du composant D.

4. Masses à mouler thermoplastiques selon la revendication 1 ou 2, contenant
5 à 93,9 % en poids du composant A,
6 à 55 % en poids du composant B,
0,1 à 5 % en poids du composant C,
0 à 25 % en poids du composant D et
0 à 30 % en poids du composant F.

5. Masses à mouler thermoplastiques selon l'une quelconque des revendications 1 à 4, contenant, en tant que composant B, un mélange de
70 à 99,95% en poids d'un poly(oxyphénylène) non modifié (composant $B_1$) et
0,05 à 30% en poids d'un agent de compatibilité de phases (composant H).

6. Masses à mouler thermoplastiques selon l'une quelconque des revendications 1 à 4, contenant, en tant que composant B, un poly(oxyphénylène) modifié (composant $B_2$).

7. Masses à mouler thermoplastiques selon la revendication 6, dans lesquelles le poly(oxyphénylène modifié $B_2$ a été préparé par réaction, en l'espace de 0,2 à 15 mn, à une température de 240 à 375°C, de
$b_1$) 70 à 99,9% en poids d'un poly(oxyphénylène,
$b_2$) 0 à 20% en poids d'un polymère vinylaromatique,
$b_3$) 0,1 à 30% en poids d'un composé à insaturation éthylénique contenant au moins un groupement époxy, amino ou un groupement acide carboxylique, anhydride carboxylique ou ester, amide ou imide d'acide carboxylique, et
$b_4$) 0 à 5% en poids d'un initiateur radicalaire.

8. Masses à mouler thermoplastiques selon l'une quelconque des revendications 1 à 7, contenant, en tant qu'oligomères ou polymères cristallins liquides thermotropes, des polyester: aromatiques ayant l'état de cristaux liquides à une température de 200 à 360°C.

9. Utilisation des masses à mouler thermoplastiques selon l'une quelconque des revendications 1 à 8 pour la fabrication d'objets moulés.

10. Objets moulés, obtenus à partir des masses à mouler thermoplastiques selon l'une quelconque des revendications 1 à 8.